# FASCICULE DE BREVET EUROPEEN

(11) **EP 0 994 767 B1**
(45) Date de publication et mention de la délivrance du brevet: **14.08.2002**
(21) Numéro de dépôt: 98937597.7
(22) Date de dépôt: 09.07.1998
(51) Int. Cl.: B29C 41/14, A41D 19/00, B29C 41/20

(54) **ARTICLE D'HABILLEMENT DU TYPE GANT DE MANIPULATION ET DE PROTECTION OBTENU A PARTIR D'UN SUPPORT TEXTILE**
AUS EINEM TEXTILEN TRÄGERMATERIAL ERZEUGTES KLEIDUNGSSTÜCK DES TYPS MANIPULIER- ODER SCHUTZHANDSCHUH
CLOTHING ARTICLE SUCH AS A WORKING OR PROTECTIVE GLOVE MADE FROM A TEXTILE SUPPORT

(30) Priorité: 11.07.1997 FR 9709125
(43) Date de publication de la demande: 26.04.2000
(73) Titulaire: Borreani, Patrick, 38200 Vienne (FR); Vaille, Pierre, 69680 Chassieu (FR)
(72) Inventeur: Borreani, Patrick, 38200 Vienne (FR); Vaille, Pierre, 69680 Chassieu (FR)
(74) Mandataire: Thivillier, Patrick
(86) Numéro de dépôt international: FR9801488
(87) Numéro de publication internationale: WO9902325

(56) Documents cités:
- EP-A- 0 205 660
- WO-A-81/00346
- DD-A- 287 743
- FR-A- 1 395 590
- FR-A- 2 494 128
- GB-A- 382 305
- GB-A- 927 235
- US-A- 2 273 995
- US-A- 4 190 685
- US-A- 5 581 812
- DATABASE WPI Section Ch, Week 844716 novembre 1984 Derwent Publications Ltd., London, GB; Class A23, AN 84-291653 [47] XP002061570 & JP 59 179882 A (TORAY IND INC) , 12 octobre 1984

## Description

L'invention se rattache au secteur technique des vêtements, et plus particulièrement des gants de protection, des chaussettes de protection et autres articles d'habillement similaires, obtenus à partir d'un article textile tricoté notamment.

Il est connu de soumettre des gants à des opérations spécifiques pour les revêtir, en totalité ou en partie, d'un produit apte à les protéger des salissures et des agressions chimiques ou mécaniques, en ayant pour objectif de respecter certaines normes de sécurité dépendant du type de travail à effectuer. Ce produit de protection peut être appliqué sur le gant par différents moyens (enduction, pulvérisation ...). De même, cette protection s'applique aux gants tricotés en matière cellulosique, synthétique, artificielle.

Cet état de la technique peut par exemple être illustré par l'enseignement du brevet US 5 581 812. Généralement, le produit de protection est un polyuréthanne en milieu solvant ou un latex ou un PVC dont l'utilisation n'est pas exempte de risques. En outre, si l'on considère la nature des produits de protection et la façon dont elle est appliquée sur le gant, ce produit a tendance à traverser les fibres ou mailles, de sorte qu'il apparaît également à l'intérieur du gant, c'est-à-dire directement en contact avec la peau de l'utilisateur. Le gant ainsi traité n'est donc pas confortable avec des risques d'allergie. On observe par ailleurs que le gant n'est plus suffisamment aéré.

On peut citer également l'enseignement du brevet DD 287 743. Ce brevet concerne un procédé d'amélioration de la stabilité à l'altération de matériaux composites constitués de couches de mousse fermée de PVC recouvertes d'une couche de protection de polyester-uréthanne. De tels matériaux composites sont particulièrement utilisés pour les articles de sport, tels que les gants de moto, les vêtements d'hiver ou les jeux de ballons. Le but recherché est d'éviter, au fur et à mesure du vieillissement de l'article que la couche de polyesteruréthanne s'écaille et se décolle de la couche de mousse de PVC.

Par le brevet US 4.190.685, on connaît un article d'habillement, en particulier, un gant, qui résiste très bien aux agents chimiques, comprenant une sous couche en tissu, normalement précoupée à la forme de l'article puis recouvert d'une couche interne d'élastomère élastique, tel un caoutchouc naturel, dérivé de latex, adhérant mais non pénétrant puis recouvert d'une couche extérieure d'un caoutchouc butyl qui peut contenir une charge anorganique. La couche inférieure du tissu confère un confort de porter tandis que la combinaison de la couche interne, qui a une haute capacité de rétention de la vapeur d'eau, et de la couche externe, qui est résistante aux liquides chimiques toxiques, confère une haute résistance aux produits chimiques pendant des durées importantes pouvant aller jusqu'à 12 heures.

Le brevet US 2.273.995 divulgue une solution technique permettant de réaliser une opération de flocage en forme sur une contre-forme nue. Les fibres coupées de quelques millimètres de long, sont projetées par un pistolet. Une contre-forme, non équipée d'un support textile, est trempée directement dans un coagulant visqueux, afin de fixer le latex. La viscosité du produit permet de planter les fibres coupées.

Le problème que se propose de résoudre l'invention est de réaliser un article d'habillement notamment du type gant de manipulation et de protection à partir d'un support textile maillé dont la face externe de la partie active du gant est traitée pour garantir la prise tactile d'objets fins tout en assurant une protection contre les salissures et les liquides, en ayant pour objectif d'obtenir un gant souple, au toucher textile confortable, rémanent et microporeux à l'air, tout en étant rendu hydrophobe et oléophobe aux liquides.

Un autre objectif de l'invention est d'obtenir une meilleure sécurité due aux propriétés anti-coupure, anti-dérapante des gants après enduction d'un produit de protection.

Pour résoudre un tel problème, il a été conçu et mis au point un procédé de traitement d'un article d'habillement du type gant de manipulation et de protection obtenu à partir d'un support textile notamment d'un support textile tricoté sans couture, selon lequel :
- le support textile reçoit un primaire d'adhérence sous forme d'un nitrate de calcium aqueux ;
- le support textile avec le primaire d'adhérence, est soumis, en totalité ou en partie, à une opération d'enduction en plongée à base d'un polymère aqueux moussé complété par un dispersant ;
- le polymère aqueux moussé apparaît seulement à l'extérieur du support textile sans traverser la maille afin de ne pas créer de contact avec la partie correspondante du corps.

Compte tenu de cette combinaison de caractéristiques, on obtient un article souple, élastique, rémanent, confortable, microporeux à l'air mais hydrophobe et oléophobe.

Avantageusement, pour résoudre le problème posé d'obtenir une dispersion aqueuse moussée, souple et élastique on utilise un polymère, de préférence polyéther-uréthanne ou polyester-uréthanne aliphatique, sans groupes isocyanates libres, de matière active comprise entre 30 et 50 % environ, avec un taux d'allongement compris entre 430 et 1200 % environ, et de préférence 820 %.

La densité du polymère aqueux moussé se situe entre 400 g/l et 700 g/l et de préférence 500 g/l pour une viscosité comprise entre 1500 et 3000 mPa.s, et de préférence 1800 mPa.s.

Pour résoudre le problème posé d'obtenir un effet moussant satisfaisant du polymère et d'améliorer la souplesse du composite gant / enduction, on rajoute, dans la dispersion aqueuse de polymère, un détergent dans une fourchette de 2 à 8 % environ.

L'utilisation d'un agent dispersant permet d'utiliser une mousse fermée qui par définition devrait être visqueuse et de rabaisser sa viscosité afin de lui permettre de couler au moment d'une enduction en plongée notamment comme il sera indiqué dans la suite de la description.

Compte tenu de la sélection des composants de base et de leur préparation, le procédé d'enduction du gant ou tout autre support textile s'effectue comme suit :
- on positionne le support textile soumis au primaire d'adhérence sur une contre-forme,
- on plonge la contre-forme dans un bain de polymère aqueux moussé,
- on soumet la contre-forme à un mouvement de pivotement alternatif,
- on retire du bain de polymère aqueux moussé, la contre-forme équipée du support textile enduit du polymère aqueux moussé,
- on égoutte l'ensemble,
- on retourne l'ensemble pour casser la ou les dernières gouttes,
- on sèche.

Sans pour cela sortir du cadre de l'invention, au lieu de prendre une base polyester ou polyéther-urethanne, on peut utiliser une base acrylique, un mélange acrylique-polyuréthanne, un acrylo-vinylique, un latex naturel ou synthétique ou tout autre polymère moussable.

L'invention est exposée ci-après plus en détail à l'aide des figures des dessins annexés, dans lesquels :
Les figures 1, 2, 3, 4, 6 et 7 sont des vues à caractère schématique montrant les principales phases du procédé du traitement selon l'invention.
La figure 5 est une vue en coupe transversale considérée selon la ligne 5.5 de la figure 4.

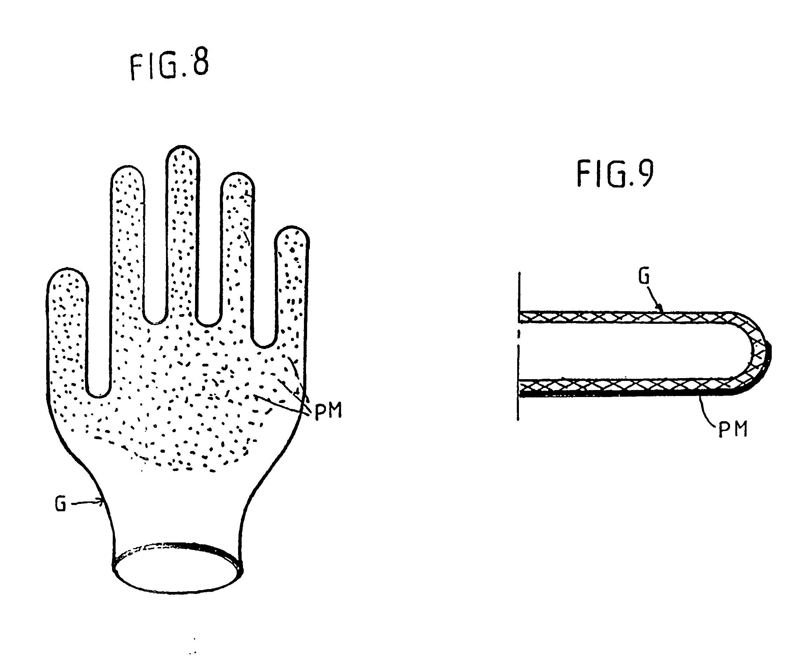

La figure 8 montre un gant de protection traité selon les caractéristiques de l'invention.
La figure 9 est, à une échelle plus importante et à caractère schématique, une vue en coupe considérée selon la ligne 9.9 de la figure 8.

On a illustré, aux figures des dessins, une application de l'invention à un gant. II est bien évident que l'invention peut être appliquée à tout autre support textile, en ayant pour objectif d'enduire un support textile, en totalité ou en partie, d'un produit de protection, notamment contre les salissures, les agressions chimiques ou mécaniques notamment. Par exemple, le support textile peut constituer un article chaussant du type chaussette. Le support textile en tant que tel résulte avantageusement d'un tricotage de fibres naturelles ou artificielles ou synthétiques.

Selon une caractéristique à la base de l'invention, le support textile est enduit d'un produit de protection (P) sous forme d'un polymère de préférence polyuréthanne préalablement moussé en mousse fermée, c'est-à-dire obtenue mécaniquement. Dans ce but et pour réaliser cette mousse, on utilise selon l'invention une dispersion aqueuse d'un polyéther-uréthanne ou polyester-uréthanne aliphatique, sans groupes isocyanates libres, de matière active comprise entre 30 et 50 % environ. Pour obtenir une certaine souplesse, le taux d'élongation doit être compris entre 430 et 1200 % de l'allongement. Une moyenne considérée comme satisfaisante se situe à 820 %. Ce polymère moussable constitue la basé du produit de protection selon l'invention.

Avantageusement, cette solution de base peut être complétée par différents composants qui seront sélectionnés et introduits en quantité variable, en fonction de la nature du support textile à traiter et des applications envisagées. Cette solution de base, à savoir le polymère moussable, est avantageusement complétée par un détergent mouillant qui est une solution aqueuse de sodium de sel de sulfate polyester de glycol d'acide gras, anionique, de matière active située entre 30 et 70 % environ. La matière active peut être diluée à volonté en fonction de la base du polymère et du support textile employé. Ce détergent permet de mousser le polymère et de rajouter une certaine souplesse au support ou article textile ainsi traité. A cet égard, il est apparu avantageux de respecter un minimum de 2 % pour avoir un effet moussant, et un maximum de 8 % pour ne pas avoir un effet trop gras.

On prévoit également de rajouter à la solution moussable de base, une solution aqueuse de stéréate d'ammonium, anionique, de matière active située entre 30 et 60 %. Comme précédemment, la matière active est adaptée en fonction de la base du polymère et du support textile utilisé. Le stéréate d'ammonium a pour effet de donner à la mousse une stabilité nécessaire dans le temps. Il est apparu avantageux d'adjoindre une quantité minimum de 4 % pouvant aller jusqu'à 6 %. Si l'on considère le détergent et le stéréate, il est apparu avantageux d'utiliser le ratio suivant : 5 % de détergent pour 5 % de stéréate. Bien évidemment, si l'on désire modifier la souplesse, le moussant et la stabilité de la mousse, le ratio devra être changé en conséquence.

Toujours en ayant pour objectif de modifier la souplesse, il est possible de rajouter de l'eau, qui en toute rigueur, ne devra pas dépasser 5 % environ, afin de ne pas faire perdre l'homogénéité du film protecteur.

Compte tenu de ce qui précède, en considérant un polymère moussé représentant 100 parts, le mélange de base suivant peut être retenu :
- 100 parts de polymère,
- 5 parts de détergents,
- 5 parts de stéréate,
- 4 parts d'eau,
- 0,7 part de pigment,
- 0,5 part de dispersant.

Pour obtenir l'effet moussé recherché, le mélange de base peut être soumis à une opération de battage ou à une opération d'adjonction d'air.

Plus le produit (P) sera dense en mousse calculée en grammes par litres, moins la viscosité sera élevée.

La difficulté est d'inverser le phénomène, c'est-à-dire d'obtenir une basse viscosité avec une densité faible et ceci en ajoutant un dispersant.

A titre d'exemple indicatif mais nullement limitatif, pour une densité de mousse de 500 g/l, il est apparu intéressant d'ajuster une viscosité de 60 +/- 5 dPa.S, mesurée par exemple avec un viscosimètre HAAKE type 808.0758, viscotester VT 02. On rappelle cependant que la densité et la viscosité doivent être équilibrées en fonction de chaque support et à chaque type de polymère en modifiant la quantité d'au moins un des éléments du mélange de base précédemment indiqué. A cet égard, on peut observer qu'une densité de mousse comprise entre 400 g/l et 700 g/l donne des résultats satisfaisants. Plus particulièrement, une densité de 500 g/L pour une viscosité de 1800 mPa.s s'avère particulièrement avantageuse.

Comme il sera indiqué dans la suite de la description, au moment notamment de l'enduction, la mousse, bien que consistante de part sa densité, doit avoir une viscosité faible, afin de descendre lentement le long du gant de manière uniforme au bout d'un temps déterminé.

Selon une autre caractéristique importante de l'invention, il est apparu important et nécessaire d'utiliser un primaire d'adhérence, eu égard à la difficulté de travailler un polymère moussé, et la difficulté de trouver un bon compromis entre la viscosité et la densité, en ayant pour objectif d'obtenir un bon accrochage du produit sur le support textile, sans pour autant traverser la maille de ce support. Ce primaire d'adhérence peut être constitué par une solution saline ou acide, notamment un nitrate de calcium en milieu aqueux sans adjonction de solvant volatile pour raison sanitaire. La combinaison eau/nitrate augmente l'hydrophilité des fibres, notamment synthétiques, et permet un meilleur accrochage en bloquant la mousse à l'intérieur des fibres, sans pour autant les traverser.

Pour cela, le gant ou autre article textile, avant enduction et mise en forme, est trempé dans la solution saline ou acide pendant une durée d'environ 10 mn maximum.

Le gant est ensuite soumis à un essorage avant mise en forme pour éviter qu'un excès d'eau ne coule après la plongée dans le polymère moussé, comme il sera indiqué, évitant ainsi la formation de stalactites coagulées le long des doigts.

Ce primaire d'adhérence a donc pour effet et pour but d'accrocher le polymère sur la fibre en augmentant les propriétés de tenue à l'abrasion, tout en évitant que la mousse ne traverse la maille. En outre, ce primaire d'adhérence évite que l'enduction, après trempage, ne se propage par capillarité sur le gant, permettant ainsi d'obtenir des contours nets, comme indiqué ci-après. Cette adhérence demeure même après lavage à l'eau ou aux solvants.

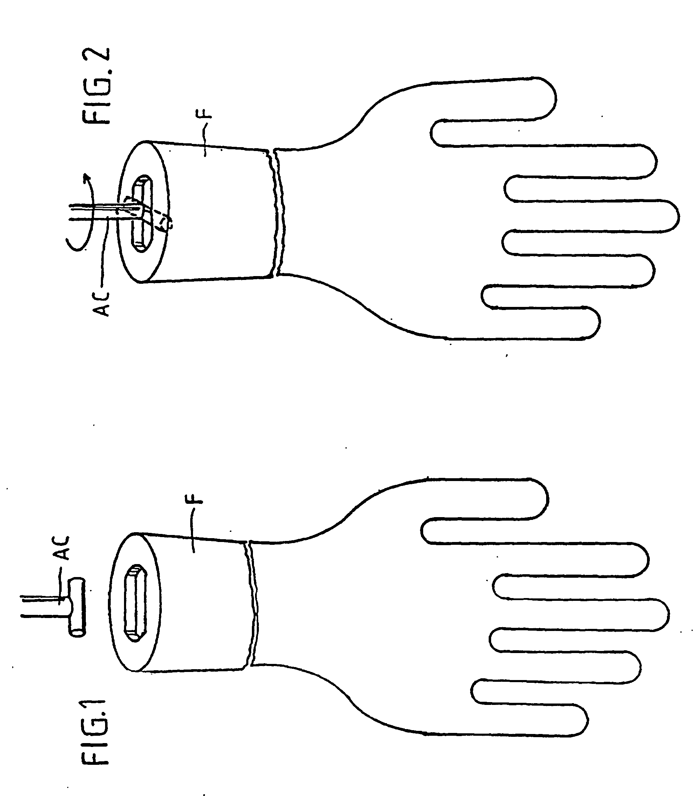

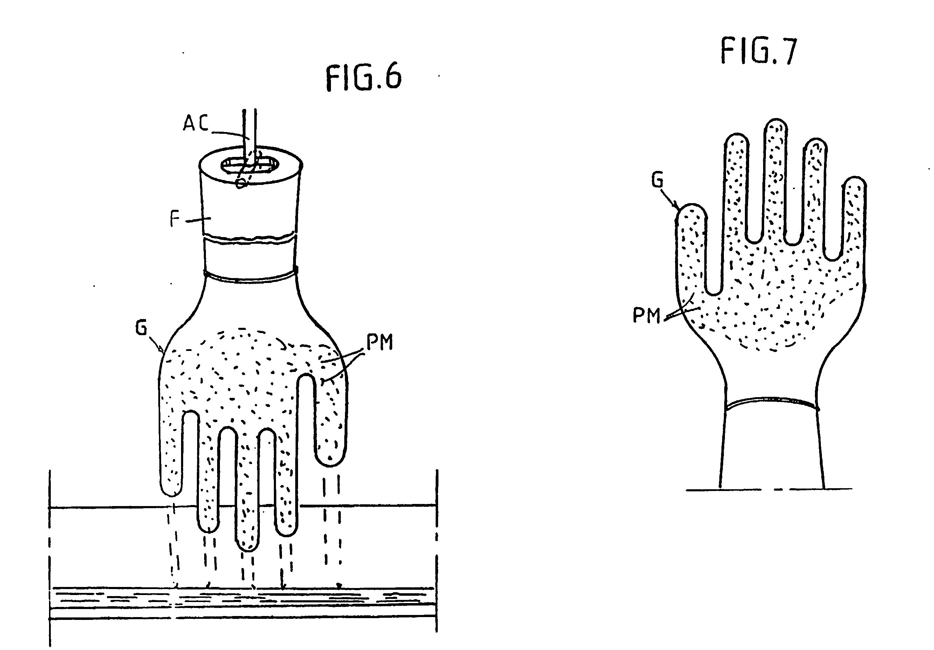

On se réfère aux figures 1, 2, 3, 4, 5, 6 et 7 du dessin qui montrent notamment le procédé de traitement d'un gant (G). Préalablement à l'opération d'enduction en tant que telle dans le polymère moussé, le gant est plongé dans la solution de nitrate pour réaliser le primaire d'adhérence, comme indiqué ci-dessus. Après essorage, le gant encore humide est disposé sur une forme (F) correspondant à une main droite ou gauche, et cela, dans différentes tailles. D'une manière parfaitement connue, ces formes (F) peuvent être réalisées en porcelaine (figure 1). A noter que chaque forme peut être assujettie à des moyens d'accrochage (AC) et de déplacement pour être amenée au niveau de la zone de traitement, c'est-à-dire du bain de polymère moussé. Par exemple, chaque contre-forme (F) peut coopérer au niveau d'une ouverture oblongue (F1) avec un crochet pivotant afin d'assurer la suspension de la contre-forme (figures 1 et 2).

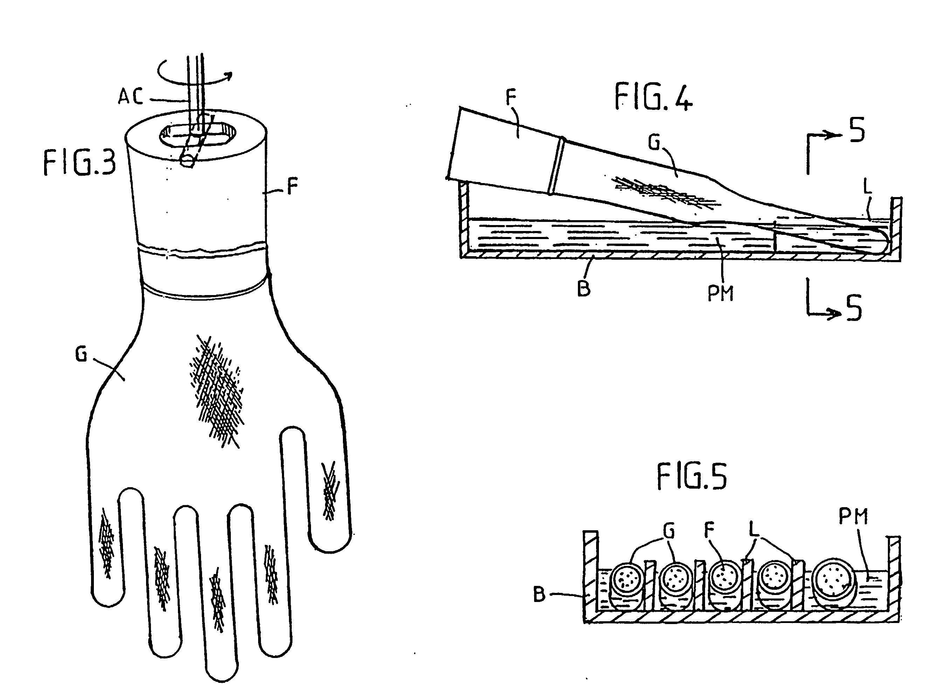

Chaque contre-forme ainsi équipée du gant et du primaire d'adhérence est plongée dans le ou les bacs (B) recevant le polymère moussé (PM). A titre indicatif nullement limitatif, les bacs ont une profondeur d'au moins 4 cm et une longueur d'environ 30 cm considérées dans la direction de la plongée. Dans ces conditions, la contre-forme, au moment de son introduction dans le ou les bacs (B), est inclinée d'environ 10° par rapport à l'horizontal (figure 4). Il apparaît donc qu'une seule partie du gant, à savoir la face active interne de ce dernier (correspondant à la paume de la main), est soumise à l'action du polymère moussé (PM). L'extrémité des doigts touche le fond venant en butée contre la paroi opposée du bac.

Sans pour cela sortir du cadre de l'invention, on n'exclut pas de plonger partiellement la contre-forme dans un plan sensiblement horizontal et de la soumettre à un déplacement de translation.

Avantageusement, le fond du bac, notamment au niveau de la zone de butée des doigts du gant, présente des languettes verticales (L) faisant office d'entretoises et destinées à coopérer avec l'interstice séparant chacun des doigts du gant. Ces dispositions permettent au polymère moussé de s'uniformiser entre et autour de la demi-partie inférieure de chaque doigt. En effet, la contre-forme (F) est soumise, par tout moyen connu et approprié, manuel ou mécanique, à un mouvement de pivotement de droite à gauche, puis d'escamotage en hauteur selon un mouvement elliptique en ayant tendance à « surfer » sur le produit moussé. Il apparaît donc que, d'une manière volontaire, seule la demi-partie inférieure des doigts du pouce et de la paume est enduite du produit moussé.

On rappelle comme déjà indiqué qu'il est tout à fait possible de réaliser une enduction totale du support textile selon les caractéristiques de l'invention.

Le gant ainsi traité est ensuite maintenu suspendu en position verticale, toujours sur sa contre-forme (F) pour être égoutté. Les coulées de produit sont récupérées. Comme indiqué précédemment, le produit moussé descend lentement le long du gant de manière uniforme. Au bout de 15 à 20 mn, le film claque entre les doigts naturellement, et cette coulée harmonieuse s'achève par un goutte-à-goutte au bout des doigts. Arrivé à la dernière goutte, il suffit de retourner la contre-forme pour avoir une répartition uniforme de cette goutte au bout des doigts correspondants.

Le gant ainsi traité est ensuite séché à l'air libre, puis éventuellement mis en étuve à une température n'excédant pas 90° C pendant une durée d'environ 15 à 20 mn.

A noter que selon le type de fibres, en particulier pour les fibres synthétiques, un rinçage d'une demi-heure est nécessaire pour éliminer toute trace de nitrate restant sur le gant. A défaut, le gant peut garder une certaine raideur. A noter que dans ce cas, il est judicieux de plonger directement la contre-forme avec le gant enduit dans l'eau, ce qui permet de retirer plus facilement le gant, la contre-forme émaillée, après refroidissement, pouvant être utilisée de suite. L'enduction, en se refroidissant rapidement, obtiendra immédiatement sa solidité et son accrochage et deviendra inerte.

Par ailleurs, et comme déjà indiqué, au lieu d'utiliser une base polyester ou polyéther-uréthanne, on n'exclut pas d'utiliser une base acrylique, un mélange acrylique polyuréthanne, un acrylo-vinylique, un latex naturel ou synthétique ou tout autre polymère moussable. De même, en fonction de la nature de l'article textile à traiter et des qualités que l'on veut obtenir en fonction notamment des applications envisagées, il suffit d'apporter au mélange de base certains composants. On indique ci-après quelques solutions techniques envisageables en fonction des propriétés de l'article que l'on veut obtenir :
- Dans le cas d'un support trop hydrophile, on rajoute un fluocarbone, à raison de 2 à 5 % environ du poids du mélange de base.
- Pour augmenter l'aspect lisse de la surface, on ajoute 2 à 3 % environ de glycérine ou une émulsion aqueuse d'un méthyl polyxiloxane modifié.
- Pour apporter du poids à l'enduction, on rajoute des charges classiques, telles que talc, craie, kaolin, barytine...
- Pour ignifuger l'article, on rajoute comme charge des oxydes d'antimoine, des oxydes d'alumine, des oxydes décabromodiphényl...
- Pour augmenter la viscosité de la mousse, on rajoute 2 à 5 g/Kg environ de la pâte d'un épaississant à base de polyacrylate de sodium, anionique, à 13 % de matière sèche +/- 2 %.
- Pour diminuer la matière active de la mousse, on rajoute de l'eau.
- Pour augmenter le degré de blanc, on rajoute de l'oxyde de titane.
- Pour diminuer la viscosité, on ajoute un dispersant.

De même, d'une manière importante, afin d'augmenter certaines résistances physiques ou chimiques du gant, ce dernier, après avoir été enduit de mousse dans les conditions indiquées, est trempé dans un ou plusieurs autres bains d'un mélange de polymères moussés ou non. A titre indicatif, ces polymères peuvent être un polyuréthanne aqueux, un acrylate, un latex ou un mélange quelconque de ces produits.

Les avantages ressortent bien de la description, en particulier on souligne et on rappelle que le gant obtenu, ou autre article d'habillement résultant d'un support textile maillé, est revêtu au niveau de sa partie active notamment, d'un produit de protection sous forme d'une mousse mécanique fermée de polyuréthanne aqueux de basse densité et de basse viscosité, en combinaison avec un primaire d'adhérence, de manière à ce que le produit ne traverse pas la maille pour ne pas entrer en contact avec la main ou autre.

La mousse est extérieure et non recouverte par aucune fibre ni support textile supplémentaire, en étant en contact direct avec l'environnement extérieur.

On observe également que le gant conserve sa souplesse naturelle en étant par ailleurs microporeux, respirable, antidérapant, lavable, anti-vibratoire.

## Revendications

1. Procédé de traitement d'un article d'habillement du type gant de manipulation et de protection (G) obtenu à partir d'un support textile, notamment d'un support textile tricoté sans couture :
- le support textile reçoit un primaire d'adhérence sous forme notamment d'un nitrate de calcium aqueux ;
- le support textile avec le primaire d'adhérence, est soumis, en totalité ou en partie, à une opération d'enduction en plongée à base d'un polymère aqueux moussé (PM) notamment complété par un dispersant en fonction de la viscosité dudit polymère aqueux moussé;
- le polymère aqueux moussé (PM) apparaît seulement à l'extérieur du support textile sans traverser la maille afin de ne pas créer de contact avec la partie correspondante du corps.

2. Procédé selon la revendication 1, **caractérisé en ce que** le polymère aqueux (PM) est de préférence un polyéther-uréthanne ou polyester-uréthanne aliphatique, sans groupes isocyanates libres, de matière active comprise entre 30 et 50 % environ, avec un taux d'allongement compris entre 430 et 1200 % environ, et de préférence 820 %.

3. Procédé selon la revendication 1, **caractérisé en ce que** la densité du polymère aqueux moussé (PM) se situe entre 400 g/l et 700 g/l et de préférence 500 g/l pour une viscosité comprise entre 1500 et 3000 mPa.s, et de préférence 1800 mPa.s.

4. Procédé selon la revendication 1, **caractérisé en ce que** le polymère aqueux moussé (PM) est également complété par un détergent, dans une fourchette de 2 à 8 % environ.

5. Procédé selon la revendication 4, **caractérisé en ce que** le détergent est notamment une solution aqueuse de sodium de sel de sulfate polyester de glycol d'acide gras, anionique, de matière active située entre 30 et 70 % environ.

6. Procédé selon la revendication 1, **caractérisé en ce que** le polymère aqueux moussé (PM) est également complété par une solution aqueuse de stéréate d'ammonium, anionique, de matière active située entre environ 30 et 60 %.

7. Procédé selon la revendication 1, **caractérisé en ce que** le polymère aqueux moussé comprend environ :
- 100 parts de polymère,
- 5 parts de détergents,
- 5 parts de stéréate,
- 4 parts d'eau,
- 0,7 part de pigment,
- 0,5 part de dispersant.

8. Procédé selon l'une quelconque des revendications 1 à 7, **caractérisé en ce que** :
- on positionne le support textile soumis au primaire d'adhérence sur une contre-forme (F),
- on plonge la contre-forme (F) dans un bain de polymère aqueux moussé (PM),
- on soumet la contre-forme (F) à un mouvement de pivotement alternatif,
- on retire du bain de polymère aqueux moussé (PM), la contre-forme (F) équipée du support textile enduit du polymère aqueux moussé,
- on égoutte l'ensemble,
- on retourne l'ensemble pour casser la ou les dernières gouttes,
- on sèche.

9. Procédé selon l'une quelconque des revendications 1 à 8, **caractérisé en ce qu'**après avoir été enduit du polymère aqueux moussé (PM), on trempe le gant dans un ou plusieurs autres bains d'un mélange de polymères moussés ou non.

## Claims

1. Process for treating an article of clothing of the glove type for handling and protection obtained from a textile support, in particular a seamless knitted textile support, **characterized in that**:
- an adhesion primer in the form in particular of an aqueous calcium nitrate is applied to the textile support;
- some or all of the textile support with the adhesion primer undergoes a dipped-coating operation based on a foamed aqueous polymer (PM) supplemented in particular by a dispersant depending on the viscosity of the said foamed aqueous polymer;
- the foamed aqueous polymer (PM) appears only on the outside of the textile support, without passing through the mesh so as not to make contact with the corresponding part of the body.

2. Process according to Claim 1, **characterized in that** the aqueous polymer (PM) is preferably an aliphatic polyetherurethane or polyesterurethane without free isocyanate groups, with between about 30 and 50% active substance, and with an elongation ratio of between about 430 and 1200%, preferably 820%.

3. Process according to Claim 1, **characterized in that** the density of the foamed aqueous polymer (PM) is between 400 g/l and 700 g/l, preferably 500 g/l, with a viscosity of between 1500 and 3000 mPa.s, preferably 1800 mPa.s.

4. Process according to Claim 1, **characterized in that** the foamed aqueous polymer (PM) is also supplemented by a detergent, in a range of about 2 to 8%.

5. Process according to Claim 4, **characterized in that** the detergent is in particular an aqueous solution of sodium salt of fatty acid glycol polyester sulfate, anionic, with between about 30 and 70% active substance.

6. Process according to Claim 1, **characterized in that** the foamed aqueous polymer (PM) is also supplemented with an aqueous solution of ammonium stearate, anionic, with between about 30 and 60% active substance.

7. Process according to Claim 1, **characterized in that** the foamed aqueous polymer comprises about:
- 100 parts polymer,
- 5 parts detergent,
- 5 parts stearate,
- 4 parts water,
- 0.7 part pigment,
- 0.5 part dispersant.

8. Process according to any one of Claims 1 to 7, **characterized in that**:
- the textile support to which the adhesion primer is applied is placed on a backing mould (F),
- the backing mould (F) is dipped in a bath of foamed aqueous polymer (PM),
- a reciprocating pivoting movement is imparted to the backing mould (F),
- the backing mould (F) fitted with the textile support coated with the foamed aqueous polymer is removed from the bath of foamed aqueous polymer (PM),
- the assembly is drained,
- the assembly is turned over to get rid of the last drop or drops,
- it is dried.

9. Process according to any one of Claims 1 to 8, **characterized in that** after having been coated with the foamed aqueous polymer (PM), the glove is dipped in one or more other baths of a mixture of polymers which may or may not be foamed.

## Patentansprüche

1. Behandlungsverfahren eines Bekleidungsartikels vom Typ Arbeits- und Schutzhandschuh (G) aus einem textilen Trägermaterial, insbesondere aus einem nahtlosen textilen Strickmaterial :
- das textile Trägermaterial erhält einen Haftvermittler insbesondere in Form eines wässrigen Kalziumnitrats;
- das textile Trägermaterial mit dem Haftvermittler wird insgesamt oder teilweise einem Tauchbeschichtungsvorgang unterzogen, insbesondere auf der Basis eines aufgeschäumten wässrigen Polymers (PM), ergänzt durch ein von der Viskosität des aufgeschäumten wässrigen Polymers abhängiges Dispergiermittel;
- das aufgeschäumte wässrige Polymer (PM) tritt nur außerhalb des textilen Trägermaterials in Erscheinung, ohne die Masche zu durchqueren, damit keine Berührung mit dem entsprechenden Körperteil erfolgt.

2. Verfahren nach Anspruch 1, **dadurch gekennzeichnet, dass** das wässrige Polymer (PM) vorzugsweise ein aliphatisches Polyether-Urethan oder Polyester-Urethan ohne freie Isozyanatgruppen ist, Wirkstoffgehalt ca. 30 - 50 %, mit einem Dehnungsfaktor von ca. 430 - 1200 %, und vorzugsweise 820 %.

3. Verfahren nach Anspruch 1, **dadurch gekennzeichnet, dass** die Dichte des aufgeschäumten wässrigen Polymers (PM) zwischen 400 g/l und 700 g/l und vorzugsweise bei 500 g/l liegt, bei einer Viskosität zwischen 1500 und 3000 mPa.s, vorzugsweise 1800 mPa.s.

4. Verfahren nach Anspruch 1, **dadurch gekennzeichnet, dass** das aufgeschäumte wässrige Polymer (PM) auch durch ein Reinigungsmittel ergänzt wird, in einer Spanne von ca. 2 - 8 %.

5. Verfahren nach Anspruch 4, **dadurch gekennzeichnet, dass** es sich bei dem Reinigungsmittel insbesondere um . eine anionische wässrige Natriumlösung, Sulfatsalz, Fettsäureglykolpolyester, mit einem Wirkstoffgehalt von ca. 30 - 70 % handelt.

6. Verfahren nach Anspruch 1, **dadurch gekennzeichnet, dass** das aufgeschäumte wässrige Polymer (PM) ebenfalls durch eine anionische wässrige Ammoniumstearatlösung mit einem Wirkstoffgehalt von ca. 30 - 60 % ergänzt wird.

7. Verfahren nach Anspruch 1, **dadurch gekennzeichnet, dass** das aufgeschäumte wässrige Polymer ca. folgende Anteile umfasst:
- 100 Teile Polymer,
- 5 Teile Reinigungsmittel,
- 5 Teile Stearat,
- 4 Teile Wasser,
- 0,7 Teile Pigment,
- 0,5 Teile Dispergiermittel.

8. Verfahren nach einem der vorhergehenden Ansprüche 1 - 7, **dadurch gekennzeichnet, dass**:
- das textile Trägermaterial mit dem Haftvermittler auf eine Gegenform (F) gelegt wird,
- die Gegenform (F) in ein Bad mit aufgeschäumtem wässrigem Polymer (PM) getaucht wird,
- die Gegenform (F) einer alternierenden Schwenkbewegung ausgesetzt wird,
- die Gegenform (F) mit dem durch das aufgeschäumte wässrige Polymer beschichteten textilen Trägermaterial aus dem Bad mit dem aufgeschäumten wässrigen Polymer (PM) gezogen wird,
- man diesen Komplex abtropfen lässt,
- man ihn umdreht, um den/die letzten Tropfen zu brechen,
- man ihn trocknen lässt.

9. Verfahren nach einem der vorhergehenden Ansprüche 1 - 8, **dadurch gekennzeichnet, dass** der Handschuh nach der Beschichtung mit dem aufgeschäumten wässrigen Polymer (PM) in ein bzw. mehrere andere Bäder eines Gemischs aus aufgeschäumten oder nicht aufgeschäumten Polymeren getaucht wird.
